# EUROPÄISCHE PATENTSCHRIFT

(11) **EP 2 672 595 B1**
(45) Veröffentlichungstag und Bekanntmachung des Hinweises auf die Patenterteilung: **20.10.2021**
(21) Anmeldenummer: 13002925.9
(22) Anmeldetag: 06.06.2013
(51) Int. Cl.: H02H 3/087

(54) **Schaltungsanordnung und Verfahren zur Gleichstromunterbrechung**
Switching assembly and method for interrupting direct current
Agencement de circuit et procédé destinés à la coupure du courant continu

(30) Priorität: 06.06.2012 DE 102012011209; 24.08.2012 DE 102012016696
(43) Veröffentlichungstag der Anmeldung: 11.12.2013
(73) Patentinhaber: SMA Solar Technology AG, 34266 Niestetal (DE)
(72) Erfinder: Bertelsmann, Götz-Martin, 88239 Wangen (DE)

(56) Entgegenhaltungen:
- WO-A2-2010/089338
- DE-A1-102009 047 104
- JP-A- H 056 725
- US-A- 5 629 658
- US-A- 5 737 160
- US-A1- 2010 254 046
- None

## Beschreibung

Die vorliegende Erfindung betrifft eine Schaltungsanordnung und ein Verfahren zur Gleichstromunterbrechung, insbesondere zur Gleichstromunterbrechung in einem Strompfad, der mit einem Eingang oder Ausgang eines Wechselrichters verbunden ist.

Wechselrichter, insbesondere transformatorlose Wechselrichter, müssen im Allgemeinen mit einer Fehlerstromüberwachung ausgestattet sein. Bei einer erkannten Fehlfunktion des Wechselrichters (z.B. hoher Gleichstromanteil des Netzstroms) wird dieser vom Netz getrennt. Zu diesem Zweck ist der Wechselrichter ausgangsseitig mit einem Trennrelais verbunden.

Während eines niederohmigen Erdschlusses an einem transformatorlosen Wechselrichter fließen beispielsweise hohe Gleichströme über ein oder mehrere Trennrelais. Wenn versucht wird diese Trennrelais zu öffnen, um den Fehlerstrom zu unterbrechen, kann ein gefährlicher Lichtbogen entstehen, der wegen einer unzureichenden Öffnungslücke zwischen den Relaiskontakten möglicherweise nicht gelöscht werden kann.

Es ist ein Bestreben, zusätzliche Sicherheit bereitzustellen, indem ein permanenter oder länger andauernder Lichtbogen verhindert wird, um einem Abbrand der Elektronik und damit dem Beginn eines gefährlichen Feuers vorzubeugen.

Die Verwendung eines Halbleiterschalters im Gleichstromunterbrecher würde zwar einen Lichtbogen beim Öffnen des Schalters vermeiden, entspricht aber nicht den Normvorschriften. Diese fordern den Einsatz von je zwei mechanischen Schaltkontakten für jedes angeschlossene Kabel. D. h. es wäre ein drittes Relais in Serie nötig, das den kompletten Laststrom dauerhaft tragen kann.

Eine den Normvorschriften genügende Lösung zur Unterbrechung eines Fehlerstroms kann durch ein großes gleichstromfähiges Relais realisiert werden, welches aber entsprechend seltener und teurer ist.

Die Druckschrift WO 2010/089338 A2 offenbart eine Schaltungsanordnung zur Begrenzung und optional einer Unterbrechung eines Gleichstroms in einem Strompfad, mit einer Vorrichtung zum Erfassen eines Gleichstroms in dem Strompfad, einem ersten Schalter und einer parallel hierzu angeordneten Reihenschaltung aus einem zweiten Schalter und einem Widerstand, wobei im Fall eines zu hohen Gleichstroms in dem Strompfad der erste Schalter geöffnet wird, um den Gleichstrom in dem Strompfad mit Hilfe des Widerstands zu reduzieren. Der in einer Ausführungsform als Option vorgesehene zweite Schalter wird nach einer vorgebbaren Zeitdauer geöffnet, um den Widerstand vor einer Überlastung zu schützen.

In der Druckschrift DE 10 2009 047104 A1 ist ein Batteriesystem offenbart, bei dem in einem Strompfad ein erstes Relais und eine Reihenschaltung aus einem zweiten Relais und einem Widerstand parallel geschaltet sind. In dem Strompfad ist eine Vorrichtung zum Erfassen eines Gleichstroms angeordnet, die zur Funktionsprüfung der Relais vorgesehen ist.

Aus der Druckschrift US 2010/0254046 A1 ist eine Schaltungsanordnung zur Gleichstromunterbrechung in einem Strompfad mit einer Vorrichtung zum Erfassen eines Gleichstroms in dem Strompfad, einem ersten Schalter, welcher zur Unterbrechung des Strompfades im Fall eines zu hohen Gleichstroms vorgesehen ist, und einer zu dem ersten Schalter parallel geschalteten Reihenschaltung aus einem zweiten, als Halbleiterschalter ausgeführten Schalter und einem PTC bekannt. Nach dem Öffnen des ersten Schalters wird der zweite Schalter mit einem pulsweitenmodulierten Signal derart angesteuert, dass der durch den geöffneten ersten Schalter fließende Lichtbogenstrom reduziert wird.

In der Druckschrift US 5 629 658 A ist eine Schaltungsanordnung zur Stromunterbrechung in einem Strompfad offenbart, bei der ein erster Schalter und eine Reihenschaltung aus einem zweiten Schalter und einem PTC parallel geschaltet sind. Die Schalter sind derart miteinander mechanisch gekoppelt, dass der zweite Schalter um eine vordefinierte Zeit nach dem Öffnen des ersten Schalters öffnet.

Die Druckschrift JP H05 6725 A offenbart eine Schaltungsanordnung zur Stromunterbrechung in einem Strompfad, bei der zu einem ersten Schalter drei Reihenschaltungen aus jeweils einem PTC und einem zweiten, dritten bzw. vierten Schalter parallel geschaltet sind. Im Fall eines zu hohen Stroms durch den ersten Schalter wird dieser zuerst geöffnet und der zweite Schalter geschlossen. Falls dann der Strom durch den zweiten Schalter zu hoch ist, wird der dritte Schalter geschlossen und falls dann der Strom durch den dritten Schalter zu hoch ist, wird der vierte Schalter geschlossen.

In der Druckschrift US 5 737 160 A ist eine Schaltungsanordnung zur

Stromunterbrechung in einem Strompfad offenbart, bei der zu einem ersten Schalter eine Reihenschaltung aus einem zweiten Schalter und einem PTC parallel geschaltet ist. Die Schalter werden entweder gleichzeitig oder der zweite Schalter wird um eine vordefinierte Zeit nach dem Öffnen des ersten Schalters geöffnet.

Der vorliegenden Erfindung liegt die Aufgabe zugrunde, eine verbesserte Schaltungsanordnung und ein verbessertes Verfahren zur Gleichstromunterbrechung vorzusehen.

Diese Aufgabe wird gelöst durch die Lehre der unabhängigen Ansprüche. Besonders bevorzugte Ausgestaltungen und Weiterbildungen der Erfindung sind in den Unteransprüchen angegeben.

Die erfindungsgemäße Schaltungsanordnung zur Gleichstromunterbrechung in einem Strompfad weist ein erstes Relais auf, welches zur Unterbrechung des Strompfades im Fall eines zu hohen Gleichstroms oder Gleichstromanteils in dem Strompfad angeordnet ist, und ist dadurch gekennzeichnet, dass parallel zu dem ersten Relais eine Reihenschaltung aus einem zweiten Relais und einem passiven Bauelement geschaltet ist.

Die gemäß der Erfindung vorgesehene Reihenschaltung aus zweitem Relais und passivem Bauelement, die parallel zum ersten Relais geschaltet ist, ermöglicht eine sichere Gleichstromunterbrechung des Strompfades mit nur wenigen und einfachen Bauteilen. Bei geschlossenem zweitem Relais kann das passive Bauelement den zu hohen Gleichstrom(anteil) aufnehmen, sodass das erste Relais und das zweite Relais gefahrlos geöffnet werden können. Sofern zwischen den geöffneten Relaiskontakten überhaupt ein Lichtbogen entsteht, ist dieser allenfalls von kurzer Dauer. Die Gefahr eines Abbrandes der Elektronik kann so deutlich reduziert werden. Außerdem kann der Verschleiß der Relaiskontakte durch weniger bzw. kürzere Lichtbögen durch die erfindungsgemäße Schaltungsanordnung verringert werden.

Bei dem passiven Bauelement, welches in Reihe zu dem zweiten Relais geschaltet ist, handelt es sich vorzugsweise um ein passives Bauelement mit einem veränderlichen oder veränderbaren elektrischen Widerstandswert. Besonders bevorzugt weist dieses passive Bauelement eine veränderliche Impedanz, einen veränderlichen Widerstand oder einen PTC-Widerstand auf.

Ein solches passives Bauelement mit einem veränderlichen oder veränderbaren elektrischen Widerstandswert hat den Vorteil, dass es in einer Anfangsphase der Gleichstromunterbrechungsprozedur zunächst mit einem niedrigen elektrischen Widerstandswert betrieben werden kann, sodass ein wesentlicher Teil des Gleichstroms über das passive Bauelement an dem ersten Relais vorbei geleitet wird und das erste Relais so gefahrlos geöffnet werden kann, und dann mit einem höheren elektrischen Widerstandswert betrieben werden kann, sodass der Stromfluss durch das zweite Relais reduziert wird und das zweite Relais somit gefahrlos geöffnet werden kann.

Bei der erfindungsgemäßen Schaltungsanordnung ist eine Vorrichtung zum Erfassen eines Gleichstroms oder Gleichstromanteils in oder an dem Strompfad vorgesehen. Anhand des erfassten Gleichstroms oder Gleichstromanteils in oder an dem Strompfad können dann die Schaltzeitpunkte für das erste und das zweite Relais bestimmt werden, um den Strompfad zu unterbrechen.

Das erste Relais und das zweite Relais sind unabhängig voneinander durch eine Steuervorrichtung ansteuerbar. Dies bedeutet insbesondere, dass das erste Relais und das zweite Relais zu unterschiedlichen Zeitpunkten geöffnet und geschlossen werden können.

In einer weiteren bevorzugten Ausgestaltung der Erfindung ist in Reihe zu dem ersten Relais in dem Strompfad ein weiteres Relais geschaltet. Dieses weitere Relais erhöht die Funktionssicherheit der gesamten Schaltungsanordnung weiter. Das weitere Relais ist separat ansteuerbar. Zudem fordern einige Normvorschriften - je nach Anwendungsfall des Gleichstromunterbrechers - eine Reihenschaltung aus wenigstens zwei mechanischen Schaltkontakten wie beispielsweise Relais.

Die erfindungsgemäße Schaltungsanordnung ist vorzugsweise derart einsetzbar, dass das erste Relais mit einem Eingang oder Ausgang eines Gerätes, insbesondere eines Wechselrichters, verbunden ist. Die Schaltungsanordnung der Erfindung kann insbesondere in Verbindung mit einem transformatorlosen Wechselrichter und einem Solarwechselrichter eingesetzt werden. Vorzugsweise ist die Schaltungsanordnung in den Wechselrichter bzw. das Wechselrichtergehäuse integriert.

Gegenstand der Erfindung ist auch ein Wechselrichter, insbesondere ein Solarwechselrichter, mit einer Umrichterschaltung und einer oben beschriebenen Schaltungsanordnung gemäß der Erfindung, welche mit einem DC-Eingang oder einem AC-Ausgang der Umrichterschaltung verbunden ist.

Das erfindungsgemäße Verfahren zur Gleichstromunterbrechung in einem Strompfad enthält die folgenden Schritte:
a) Erfassen eines Gleichstroms oder Gleichstromanteils durch ein geschlossenes erstes Relais in dem Strompfad;
b) Schließen eines zweiten Relais, welches in Reihe mit einem passiven Bauelement geschaltet ist, wobei die Reihenschaltung aus zweitem Relais und passivem Bauelement parallel zu dem ersten Relais geschaltet ist, falls der erfasste Gleichstrom oder Gleichstromanteil einen vorbestimmten ersten Wert übersteigt; und
c) Öffnen des ersten Relais und anschließend des zweiten Relais.

Mit diesem Verfahren können die gleichen Vorteile wie mit der oben beschriebenen Schaltungsanordnung der Erfindung erzielt werden.

Bei dem erfindungsgemäßen Verfahren erfolgt das Öffnen des zweiten Relais im obigen Schritt c), nachdem der Gleichstrom oder Gleichstromanteil in dem Strompfad unter einen vorbestimmten zweiten Wert gefallen ist, wobei der zweite Wert niedriger als der erste Wert ist. Bei dem zweiten vorbestimmten Wert des Gleichstroms oder Gleichstromanteils handelt es sich vorzugsweise um den kritischen Wert zum Öffnen des ersten Relais.

Das passive Bauelement hat vorzugsweise einen veränderlichen oder veränderbaren elektrischen Widerstandswert. Besonders bevorzugt weist es eine veränderliche Impedanz, einen veränderlichen Widerstand oder einen PTC-Widerstand auf.

In einer weiteren bevorzugten Ausgestaltung der Erfindung ist in Reihe zu dem ersten Relais in dem Strompfad ein weiteres Relais geschaltet. Bei dieser

Ausgestaltung wird im obigen Schritt c) nach dem Öffnen des ersten Relais neben dem zweiten Relais vorzugsweise auch das weitere Relais geöffnet.

In einer bevorzugten Alternative wird im obigen Schritt c) beim Öffnen des ersten Relais neben dem zweiten Relais vorzugsweise auch das weitere Relais geöffnet. Hierdurch wird ein maximaler Trennabstand schnellstmöglich erreicht.

Das erfindungsgemäße Verfahren eignet sich vorzugsweise zur Gleichstromunterbrechung eines Strompfades, der mit einem Eingang oder Ausgang eines Gerätes, insbesondere eines Wechselrichters, verbunden ist.

Die vorliegende Erfindung beschreibt eine neue Herangehensweise, um einen Gleichstrom in einem gewöhnlichen Wechselstromrelais mit lediglich einer minimalen Anzahl an externen, passiven Komponenten zu unterbrechen.

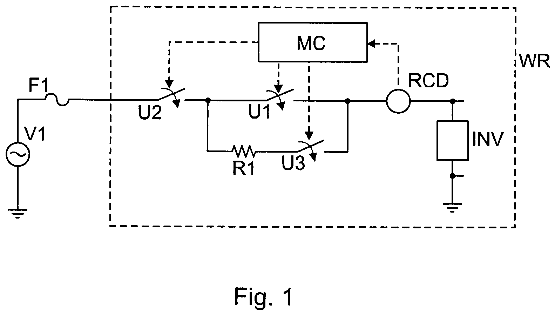

Obige sowie weitere Merkmale und Vorteile der Erfindung werden aus der nachstehenden Beschreibung eines bevorzugten, nicht-einschränkenden Ausführungsbeispiels unter Bezug auf die beiliegende Zeichnung besser verständlich. Darin zeigt die einzige Fig. 1 ein stark vereinfachtes Blockschaltbild einer erfindungsgemäßen Schaltungsanordnung zur Gleichstromunterbrechung für einen Wechselrichter.

Die Schaltungsanordnung zur Gleichstromunterbrechung enthält in dem Strompfad zwischen der Umrichterschaltung INV des Wechselrichters WR und dem Netz V1 ein erstes Relais U1 und ein weiteres Relais U2, die in Reihe geschaltet sind. Die Reihenschaltung der Relais U1, U2 ist somit mit dem AC-Ausgang des Wechselrichters WR verbunden. Für das erste Relais U1 und das weitere Relais U2 können einfache Wechselstromrelais verwendet werden.

Parallel zum ersten Relais U1 ist ein zweites Relais U3 mit einem PTC-Widerstand R1 in Reihe geschaltet. Auch für dieses zweite Relais U3 kann ein einfaches Wechselstromrelais verwendet werden. Das zweite Relais U3 kann eine geringere Stromtragfähigkeit aufweisen. Eine spezielle Abschaltreihenfolge wird genutzt, um einen Fehlergleichstrom in dem Strompfad zu unterbrechen.

Es können auch mehrere zweite Relais U3 und/oder mehrere PTC-Widerstände R1 verwendet werden. Die Reihenschaltung aus zweitem Relais U3 und PTC-

Widerstand R1 kann alternativ oder zusätzlich auch parallel zum weiteren Relais U2 geschaltet sein.

Anstelle oder zusätzlich zum PTC-Widerstand R1 können in Reihe zum zweiten Relais U3 auch andere passive Bauelemente mit einem veränderlichen oder veränderbaren elektrischen Widerstandswert, wie beispielsweise veränderliche Impedanzen oder veränderliche Widerstände, geschaltet werden.

Außer für die neue Ansteuerplanung des zweiten Relais U3 müssen keine bedeutenden und/oder teuren Designänderungen durchgeführt werden. Das erfindungsgemäße Konzept ist eine günstigere Lösung anstatt die Reihenschaltung der Relais U1 und U2 mit teuren und seltenen Relais mit Gleichstromunterbrechungsfähigkeit aufzubauen.

Durch die Kombination von passiven Bauteilen R1 mit schon vorhandenen elektromechanischen Komponenten U1, U2, U3 ist es möglich, einen hohen Gleichstrom zu unterbrechen, den die Relais U1, U2, U3 alleine so nicht gefahrlos trennen könnten. Dieser Schaltungsaufbau ist kombiniert mit einer speziellen Abschaltreihenfolge in der Lage, lang anhaltende und somit gefährliche Lichtbögen an den geöffneten Relaiskontakten zu verhindern.

Ein Stromdetektor - insbesondere ein Fehlerstromdetektor RCD - erfasst einen Gleichstrom(anteil) in dem Strompfad zwischen der Umrichterschaltung INV und dem Netz V1. Er stellt sein Messsignal einer Steuervorrichtung (z.B. Mikrocontroller) MC zur Auswertung zur Verfügung. Die Steuervorrichtung MC steuert die Relais U1, U2, U3 der Schaltungsanordnung u.a. in Abhängigkeit von dem erfassten Gleichstrom(anteil) in dem Strompfad an.

Zusätzlich ist in dem Strompfad zwischen dem Wechselrichter und dem Netz eine Sicherung F1 vorgesehen. Die Sicherung F1 ist nicht dazu ausgelegt, den DC-Strom zu unterbrechen.

Im normalen Betrieb, d.h. wenn der Wechselrichter WR Leistung in das Netz V1 einspeist, sind das erste Relais U1 und das weitere Relais U2 geschlossen, wohingegen das zweite Relais U3 geöffnet ist. Detektiert die Steuervorrichtung MC basierend auf dem Messsignal des Fehlerstromdetektors RCD einen Fehlergleichstrom, der die Fähigkeit des ersten Relais U1 zur Gleichstromunterbrechung übersteigt, so werden nicht einfach die beiden Relais U1 und U2 geöffnet, sondern es wird eine spezielle Abschaltreihenfolge ausgeführt.

Bei der erfindungsgemäßen Schaltungsanordnung wird zunächst das zusätzliche zweite Relais U3 geschlossen. Der PTC-Widerstand R1, der in Reihe zum zweiten Relais U3 geschaltet ist, ist derart gewählt, dass sein elektrischer Widerstandswert im kalten Betriebszustand, d.h. insbesondere auch direkt nach dem Schließen des zweiten Relais U3, niedrig ist. Der Strom fließt somit von der Umrichterschaltung über beide Zweige des Strompfades.

Dann wird das erste Relais U1 geöffnet. Der PTC-Widerstand R1 ist für normale Betriebsbedingungen derart gewählt, dass er den Fehlerstrom zum größten Teil aufnimmt, sodass der Lichtbogen über den geöffneten Relaiskontakten des ersten Relais U1 (zumindest annähernd) abreißt. Ein ggf. am geöffneten ersten Relais U1 entstehender Lichtbogen ist allenfalls von kurzer Dauer und daher gefahrlos für die Elektronik.

Da der (Haupt-)Strom nun über das geschlossene zweite Relais U3 durch den PTC-Widerstand R1 fließt, steigen dessen innere Temperatur und als Folge davon sein elektrischer Widerstandswert. Dadurch reduziert sich der gesamte Gleichstrom im Strompfad, während der Strom nicht signifikant durch einen potentiellen Lichtbogen über dem Öffnungskontakt U1 ansteigt.

Wenn der Stromwert nun unter den für die Relaiskontakte kritischen Wert zum Abschalten abfällt, werden alle verbleibenden Relais U2 und U3, die noch geschlossen waren, durch die Steuervorrichtung MC zum Öffnen ausgelöst, um dadurch den (Fehler-)Gleichstrom zu unterbrechen und die beiden Seiten INV, V1 sicher voneinander zu trennen.

Wegen des reduzierten Stroms, der durch die Öffnungskontakte fließt, wird eine Konglutination der Kontakte ebenso verhindert (abhängig von der Position, geöffnet oder geschlossen). Zusätzlicher Abbrand an den Kontakten ist reduziert und wegen der geringeren Leistungsstärke in den Lichtbögen (als ohne das erfindungsgemäße Verfahren) ist die Lebensdauer nicht so signifikant reduziert bzw. sogar verlängert.

In einer bevorzugten Ausführungsform wird der herkömmliche Widerstand, der für die Mittelung der Potentiale, der Vorladung von Kondensatoren, der Vormagnetisierung von Induktivitäten oder einer beliebigen Kombination daraus vorgesehen war, um einen Einschaltstoßstrom beim Schließen der Hauptstromrelais U1, U2 zu begrenzen, ersetzt durch einen sachgemäß ausgewählten PTC-Widerstand R1, sodass diese Funktion (Begrenzung des Einschaltstroms) genauso durch den PTC-Widerstand R1 übernommen werden kann wie die Unterbrechung des Gleichstroms (Stopp-Funktion).

Die erfindungsgemäße Schaltungsanordnung ist nicht auf den oben erläuterten Anwendungsfall am AC-Ausgang eines Wechselrichters WR beschränkt.

Besonders vorteilhat ist die Schaltungsanordnung der Erfindung bei Solarwechselrichtern und bei transformatorlosen Wechselrichtern einsetzbar. Die Schaltungsanordnung zur Gleichstromunterbrechung kann auch am DC-Eingang des Wechselrichters WR eingesetzt werden. Sie kann einmal oder mehrfach sowohl am Ein- oder Ausgang als auch ein- oder mehrphasig eingesetzt werden.

### BEZUGSZEICHENLISTE

- F1: Sicherung
- INV: Umrichterschaltung
- MC: Steuervorrichtung (Mikrocontroller)
- RCD: Fehlerstromerfassungsvorrichtung
- R1: passives Bauelement
- U1: erstes Relais
- U2: weiteres Relais
- U3: zweites Relais
- V1: Netz
- WR: Wechselrichter

## Patentansprüche

1. Schaltungsanordnung zur Gleichstromunterbrechung in einem Strompfad, mit einer Vorrichtung (RCD) zum Erfassen eines Gleichstroms oder Gleichstromanteils in oder an dem Strompfad, einem ersten Relais (U1), welches zur Unterbrechung des Strompfades im Fall eines zu hohen Gleichstroms oder Gleichstromanteils in dem Strompfad angeordnet ist und im Normalbetrieb geschlossen ist,
**dadurch gekennzeichnet, dass**
parallel zu dem ersten Relais (U1) eine Reihenschaltung aus einem zweiten Relais (U3), das im Normalbetrieb geöffnet ist, und einem passiven Bauelement (R1) geschaltet ist und dass das erste Relais (U1) und das zweite Relais (U3) unabhängig voneinander durch eine Steuervorrichtung (MC) ansteuerbar sind, wobei die Steuervorrichtung (MC) dazu eingerichtet ist, das zweite Relais (U3) zu schließen, falls der erfasste Gleichstrom oder Gleichstromanteil einen vorbestimmten ersten Wert übersteigt, dann das erste Relais (U1) zu öffnen und anschließend das zweite Relais (U3) zu öffnen, nachdem der Gleichstrom oder Gleichstromanteil in dem Strompfad unter einen vorbestimmten zweiten Wert gefallen ist, wobei der zweite Wert niedriger als der erste Wert ist.

2. Schaltungsanordnung nach Anspruch 1,
**dadurch gekennzeichnet, dass**
das passive Bauelement (R1) einen veränderlichen oder veränderbaren elektrischen Widerstandswert hat.

3. Schaltungsanordnung nach Anspruch 2,
**dadurch gekennzeichnet, dass**
das passive Bauelement (R1) eine veränderliche Impedanz, einen veränderlichen Widerstand oder einen PTC-Widerstand aufweist.

4. Schaltungsanordnung nach einem der vorhergehenden Ansprüche,
**dadurch gekennzeichnet, dass**
in Reihe zu dem ersten Relais (U1) in dem Strompfad ein weiteres Relais (U2) geschaltet ist.

5. Schaltungsanordnung nach Anspruch 4,
**dadurch gekennzeichnet, dass**
die Steuervorrichtung (MC) dazu eingerichtet ist, neben dem zweiten Relais (U3) auch das weitere Relais (U2) nach dem ersten Relais (U1) zu öffnen, nachdem der Gleichstrom oder Gleichstromanteil in dem Strompfad unter den vorbestimmten zweiten Wert gefallen ist.

6. Schaltungsanordnung nach einem der vorhergehenden Ansprüche,
**dadurch gekennzeichnet, dass**
das erste Relais (U1) mit einem Eingang oder Ausgang eines Gerätes verbunden ist.

7. Schaltungsanordnung nach Anspruch 6,
**dadurch gekennzeichnet, dass**
das Gerät ein Wechselrichter (WR) ist.

8. Wechselrichter (WR) mit einer Umrichterschaltung (INV) und einer Schaltungsanordnung nach einem der Ansprüche 1 bis 7, welche mit einem DC-Eingang oder einem AC-Ausgang der Umrichterschaltung (INV) verbunden ist.

9. Wechselrichter (WR) nach Anspruch 8, wobei der Wechselrichter (WR) ein Solarwechselrichter ist.

10. Verfahren zur Gleichstromunterbrechung in einem Strompfad, mit den Schritten:
a) Erfassen eines Gleichstroms oder Gleichstromanteils durch ein im Normalbetrieb geschlossenes erstes Relais (U1) in dem Strompfad;
b) Schließen eines zweiten Relais (U3), welches in Reihe mit einem passiven Bauelement (R1) geschaltet ist und im Normalbetrieb geöffnet ist, wobei die Reihenschaltung aus zweitem Relais (U3) und passivem Bauelement (R1) parallel zu dem ersten Relais (U1) geschaltet ist, falls der erfasste Gleichstrom oder Gleichstromanteil einen vorbestimmten ersten Wert übersteigt; und
c) Öffnen des ersten Relais (U1), nachdem das zweite Relais (U3) geschlossen wurde, und anschließend Öffnen des zweiten Relais (U3), nachdem der Gleichstrom oder Gleichstromanteil in dem Strompfad unter einen vorbestimmten zweiten Wert gefallen ist, wobei der zweite Wert niedriger als der erste Wert ist.

11. Verfahren nach Anspruch 10,
**dadurch gekennzeichnet, dass**
das passive Bauelement (R1) einen veränderlichen oder veränderbaren elektrischen Widerstandswert hat.

12. Verfahren nach Anspruch 11,
**dadurch gekennzeichnet, dass**
das passive Bauelement (R1) eine veränderliche Impedanz, einen veränderlichen Widerstand oder einen PTC-Widerstand aufweist.

13. Verfahren nach einem der Ansprüche 10 bis 12,
**dadurch gekennzeichnet, dass**
in Reihe zu dem ersten Relais (U1) in dem Strompfad ein weiteres Relais (U2) geschaltet ist; und
in Schritt c) nach dem Öffnen des ersten Relais (U1) neben dem zweiten Relais (U3) auch das weitere Relais (U2) geöffnet wird.

14. Verfahren nach einem der Ansprüche 10 bis 13 zur Gleichstromunterbrechung eines Strompfades, der mit einem Eingang oder Ausgang eines Gerätes verbunden ist.

15. Verfahren nach Anspruch 14, wobei das Gerät ein Wechselrichter (WR) ist.

## Claims

1. Circuit arrangement for direct current interruption in a current path, with a device (RCD) for detecting a direct current or direct-current component in or on the current path, a first relay (U1) that is arranged for interrupting the current path in the case of a too high direct current or direct-current component in the current path and is closed during normal operation, **characterized in that** in parallel with the first relay (U1) a series circuit of a second relay (U3) that is open during normal operation and a passive component (R1) is connected and that the first relay (U1) and the second relay (U3) can be controlled independently of one another by a controller (MC), wherein the controller (MC) is arranged to close the second relay (U3) if the detected direct current or direct-current component exceeds a predetermined first value, then to open the first relay (U1) and afterwards to open the second relay (U3) after the direct current or direct-current component in the current path has fallen below a predetermined second value, wherein the second value is lower than the first value.

2. Circuit arrangement according to claim 1, **characterized in that** the passive component (R1) has a variable or alterable electrical resistance value.

3. Circuit arrangement according to claim 1, **characterized in that** the passive component (R1) comprises a variable impedance, a variable resistor or a PTC thermistor.

4. Circuit arrangement according to one of the preceding claims, **characterized in that** a further relay (U2) is connected in series to the first relay (U1) in the current path.

5. Circuit arrangement according to claim4, **characterized in that** the controller (MC) is arranged to also open the further relay (U2) besides the second relay (U3) after the direct current or direct-current component in the current path has fallen below the predetermined second value.

6. Circuit arrangement according to one of the preceding claims, **characterized in that** the first relay (U1) is connected to an input or output of a device.

7. Circuit arrangement according to claim 6, **characterized in that** the device is an inverter (WR).

8. Inverter (WR) having an inverter circuit (INV) and a circuit arrangement according to any one of claims 1 to 7 that is connected to a DC input or an AC output of the inverter circuit or (INV).

9. Inverter (WR) according to claim 8, wherein the inverter (WR) is a solar inverter.

10. Method for direct current interruption in a current path, comprising the steps of:
a) detecting a direct current or a direct-current component through a first relay (U1) in the current path that is closed during normal operation;
b) closing a second relay (U3) that is connected in series with a passive component (R1) and is open during normal operation, wherein the series circuit of the second relay (U3) and the passive component (R1) is connected in parallel with the first relay (U1), if the detected direct current or a direct-current component exceeds a predetermined first value; and
c) opening the first relay (U1) after the second relay (U3) has been closed and subsequently opening the second relay (U3) after the direct current or direct-current component in the current path has fallen below a predetermined second value, wherein the second value is lower than the first value.

11. Method according to claim 10, **characterized in that** the passive component (R1) has a variable or alterable electrical resistance value.

12. Method according to claim 11, **characterized in that** the passive component (R1) comprises a variable impedance, a variable resistor or a PTC thermistor.

13. Method according to any one of claims 10 to 12, **characterized in that** a further relay (U2) is connected in series with the first relay (U1) in the current path; and in step c) after opening the first relay (U1), besides the second relay (U3) also the further relay (U2) is opened.

14. Method according to any one of claims 10 to 13 for direct current interruption of a current path that is connected to an input or output of a device.

15. Method according to claim 14, wherein the device is an inverter (WR).

## Revendications

1. Circuit pour l'interruption du courant continu dans un trajet de courant, comprenant un dispositif (RCD) pour la détection d'un courant continu ou d'une composante de courant continu dans ou sur le trajet de courant, un premier relais (U1) qui est disposé pour interrompre le trajet de courant en cas de courant continu ou de composante de courant continu trop élevé dans le trajet de courant et qui est fermé en fonctionnement normal, **caractérisé en ce que**
un circuit série d'un deuxième relais (U3), qui est ouvert en fonctionnement normal, et d'un composant passif (R1) est monté en parallèle avec le premier relais (U1), et **en ce que** le premier relais (U1) et le deuxième relais (U3) peuvent être actionnés indépendamment l'un de l'autre par un dispositif de commande (MC), le dispositif de commande (MC) étant prévu à cet effet, fermer le deuxième relais (U3) si le courant continu ou la composante continue détecté(e) dépasse une première valeur prédéterminée, puis ouvrir le premier relais (U1) et ouvrir ensuite le deuxième relais (U3) après que le courant continu ou la composante continue dans le trajet de courant soit tombé(e) en dessous d'une deuxième valeur prédéterminée, la deuxième valeur étant inférieure à la première valeur.

2. Circuit selon la revendication 1,
**caractérisé en ce que**
le composant passif (R1) a une valeur de résistance électrique variable ou modifiable.

3. Circuit selon la revendication 2,
**caractérisé en ce que**
le composant passif (R1) a une impédance variable, une résistance variable ou une résistance CTP.

4. Circuit selon l'une des revendications précédentes,
**caractérisé en ce que**
un autre relais (U2) est connecté en série avec le premier relais (U1) dans le trajet de courant.

5. Circuit selon la revendication 4,
**caractérisé en ce que**
le dispositif de commande (MC) est configuré pour ouvrir non seulement le deuxième relais (U3) mais aussi l'autre relais (U2) après le premier relais (U1) après que le courant continu ou la composante de courant continu dans le trajet de courant soit tombé en dessous de la deuxième valeur prédéterminée.

6. Circuit selon l'une des revendications précédentes,
**caractérisé en ce que**
le premier relais (U1) est relié à une entrée ou une sortie d'un dispositif.

7. Circuit selon la revendication 6,
**caractérisé en ce que**
le dispositif est un onduleur (WR).

8. Onduleur (WR) comprenant un circuit onduleur (INV) et un circuit selon l'une quelconque des revendications 1 à 7, qui est connecté à une entrée de courant continu ou à une sortie de courant alternatif du circuit onduleur (INV).

9. Onduleur (WR) selon la revendication 8, dans lequel l'onduleur (WR) est un onduleur photovoltaïque.

10. Procédé d'interruption du courant continu dans un chemin de courant, comprenant les étapes suivantes:
a) détecter un courant continu ou une composante de courant continu par un premier relais (U1) fermé en fonctionnement normal dans le trajet de courant;
b) fermer un deuxième relais (U3) qui est connecté en série avec un composant passif (R1) et qui est ouvert en fonctionnement normal, la connexion en série du deuxième relais (U3) et du composant passif (R1) étant connectée en parallèle avec le premier relais (U1) si le courant continu ou la composante de courant continu détecté dépasse une première valeur prédéterminée ; et
c) ouvrir le premier relais (U1) après que le second relais (U3) a été fermé, et ouvrir ensuite le second relais (U3) après que le courant continu ou la composante continue dans le trajet de courant est tombé en dessous d'une seconde valeur prédéterminée, la seconde valeur étant inférieure à la première valeur.

11. Procédé selon la revendication 10,
**caractérisé en ce que**
le composant passif (R1) a une valeur de résistance électrique variable ou modifiable.

12. Procédé selon la revendication 11,
**caractérisé en ce que**
le composant passif (R1) a une impédance variable, une résistance variable ou une résistance CTP.

13. Procédé selon l'une quelconque des revendications 10 à 12,
**caractérisé en ce que**
un autre relais (U2) est connecté en série avec le premier relais (U1) dans le trajet de courant ; et
à l'étape c), après l'ouverture du premier relais (U1), l'autre relais (U2) est également ouvert en plus du deuxième relais (U3).

14. Procédé selon l'une quelconque des revendications 10 à 13 pour l'interruption en courant continu d'un chemin de courant connecté à une entrée ou une sortie d'un dispositif.

15. Procédé selon la revendication 14, dans lequel le dispositif est un onduleur (WR).
